# EUROPÄISCHE PATENTSCHRIFT

(11) **EP 1 934 485 B1**
(45) Veröffentlichungstag und Bekanntmachung des Hinweises auf die Patenterteilung: **04.05.2011**
(21) Anmeldenummer: 06793232.7
(22) Anmeldetag: 05.09.2006
(51) Int. Cl.: F04D 29/58, F04D 27/02, F04D 25/16, F01P 7/04

(54) **KÜHLERLÜFTERMODUL FÜR EIN KRAFTFAHRZEUG**
COOLING FAN MODULE FOR A MOTOR VEHICLE
MODULE VENTILATEUR DE RADIATEUR POUR UN VEHICULE A MOTEUR

(30) Priorität: 12.10.2005 DE 102005048887
(43) Veröffentlichungstag der Anmeldung: 25.06.2008
(73) Patentinhaber: Brose Fahrzeugteile GmbH & Co. KG, Würzburg, 97076 Würzburg (DE)
(72) Erfinder: DE FILIPPIS, Pietro, I-20124 Milano (IT); REDELBERGER, Harald, 97273 Kürnach (DE)
(74) Vertreter: Reinhard - Skuhra - Weise & Partner GbR
(86) Internationale Anmeldenummer: PCT/EP2006/066021
(87) Internationale Veröffentlichungsnummer: WO 2007/042353

(56) Entgegenhaltungen:
- EP-A1- 0 761 982
- EP-A1- 1 495 886
- JP-A- 2006 007 921
- US-A1- 2003 140 643

## Beschreibung

Die Erfindung betrifft ein Kühlerlüftermodul für ein Kraftfahrzeug. Insbesondere betrifft die Erfindung ein Kühlerlüftermodul mit einem ersten Lüftermotor zum Antrieb eines ersten Kühlerlüfters und mit einem zweiten Lüftermotor zum Antrieb eines zweiten Kühlerlüfters.

In Kühlerlüftermodulen für Kraftfahrzeuge werden häufig zwei oder mehr Kühlerlüfter eingesetzt. Bei der Verwendung zweier Kühlerlüfter spricht man auch von einem Doppelmodul. Der Einsatz mehrerer Kühlerlüfter erfolgt aus mehreren Gründen:
Zum einen ist oft der zur Verfügung stehende Bauraum im Fahrzeug begrenzt. Zum anderen ist auch die benötigte Luftleistung ein Argument für die Verwendung mehrerer Kühlerlüfter. Da bei größeren Leistungen die verwendeten Lüftermotoren länger werden, kann im Hinblick auf die benötigte Baulänge eine Aufteilung auf zwei kleinere, kürzere Lüftermotoren sinnvoll sein. Werden hohe Kühlleistungen benötigt, ist eine Aufteilung auf zwei (oder mehrere) Kühlerlüfter oft sinnvoll und/oder notwendig, da aufgrund einer unzureichenden Wärmeabfuhr ein einzelner Lüftermotor die benötigte Leistung nicht zur Verfügung stellen kann.

Darüber hinaus kann es aufgrund des Designs eines Fahrzeugs oder anderer Gründe erforderlich sein, dass Wärmetauscher zum Einsatz kommen, die eine mehr rechteckige Form aufweisen. Im Gegensatz zu einem quadratischen Aufbau ist bei einem mehr rechteckigen Aufbau eine Doppellüfterkonfiguration sinnvoll, da damit eine größere Abdeckung des Wärmetauschers erreicht werden kann und die Anströmung aus den Ecken des Wärmetauschers verbessert wird.

Schließlich kommen zwei oder mehrere Kühlerlüfter dann zum Einsatz, wenn - beispielsweise aus Gründen der Verfügbarkeit - eine Redundanz erreicht werden soll.

Bisher wiesen solche Doppelmodule zwei bürstenbehaftete Gleichstrommotoren auf, die entweder in Reihe oder parallel betrieben wurden, um bestimmte Drehzahl- und damit Luftleistungsstufen zu erhalten. In neueren Anwendungen werden die bürstenbehafteten Gleichstrommotoren mit entweder internen, externen oder in einem der beiden Motoren integrierten PWM-Stelleinheiten betrieben.

Erhöhte Anforderungen bezüglich Baulänge, Leistung und Kosten erfordern auch für Doppelmodule neue Lösungsansätze.

In der EP 1495 886 A1 ist eine elektrische Lüftereinrichtung für ein Fahrzeug beschrieben, mit einem ersten elektrischen Lüfter, der einen bürstenlosen Motor verwendet, mit einem zweiten elektrischen Lüfter, der einen bürstenbehafteten Motor verwendet. Die Lüftereinrichtung weist ferner eine elektrische Steuerungseinrichtung auf, welche nur den ersten Lüfter aktiviert, wenn sie festestellt, dass die Kühlwassertemperatur geringer als eine Temperatur T2 ist, und aktiviert den ersten und den zweiten Lüfter, wenn sie feststellt, dass die Kühlwassertemperatur größer oder gleich der Temperatur T2 ist.

In der US 2003/0140643 A1 ist eine Antriebsvorrichtung für Lüftermotoren für Fahrzeuge beschrieben, welche einen ersten bis vierten Halbleiterschalter zum Betrieb eines ersten und zweiten Lüftermotors aufweist.

Eine Aufgabe der vorliegenden Erfindung ist es, eine technische Lösung für eine kostengünstige und kompakte Kühlerlüftung bereitzustellen.

Diese Aufgabe wird durch ein Kühlerlüftermodul für ein Kraftfahrzeug nach Anspruch 1 bzw. durch ein Verfahren nach Anspruch 4 gelöst.

Das erfindungsgemäße Kühlerlüftermodul weist einen bürstenlosen ersten Lüftermotor zum Antrieb eines ersten Kühlerlüfters und einen zweiten Lüftermotor zum Antrieb eines zweiten Kühlerlüfters auf, wobei dem ersten Lüftermotor eine Steuereinheit zugeordnet ist, die zugleich mit dem ersten Lüftermotor auch den zweiten Lüftermotor betreibt.

Mit einem solchen Kühlerlüftermodul lässt sich ein Verfahren verwirklichen, wobei der erste Lüftermotor über die Steuereinheit drehzahlgeregelt angesteuert wird und sich die Drehzahl des zweiten Lüftermotors in Abhängigkeit von der Drehzahl des ersten Lüftermotors einstellt.

Eine Grundidee der Erfindung ist eine hybride Anordnung eines bürstenlosen Lüftermotors mit einem zweiten Lüftermotor vorzusehen. Dabei wird nur eine Elektronikeinheit für den bürstenlosen Lüftermotor eingesetzt und für den zweiten Lüftermotor mitgenutzt. Mit anderen Worten erfolgt der Betrieb des zweiten Lüftermotors (der keine eigene Steuereinheit aufweist) automatisch und zwangsläufig, sobald der erste Lüftermotor betrieben wird. Dabei kommt lediglich eine einzige Steuereinheit zum Einsatz.

Die erfindungsgemäße Lösung steht damit völlig im Gegensatz zu bereits bekannten Ansätzen, bei denen eine einzige Steuereinheit nur deshalb zum Betreiben zweier Lüftermotoren verwendet werden kann, weil die Steuereinheit zwei separate Ansteuerungen enthält, nämlich für jeden Lüftermotor eine. Derartige bekannte Steuereinheiten bestehen streng genommen aus zwei einzelnen Steuereinheiten, die in ein und demselben Gehäuse untergebracht sind.

Aufgrund der Verwendung eines bürstenlosen Lüftermotors kann eine gegenüber den aus dem Stand der Technik bekannten Lösungen deutlich höhere Zuverlässigkeit und Lebensdauer der Kühlerlüfter erzielt werden.

Durch die Verwendung eines bürstenlosen Lüftermotors ist es darüber hinaus möglich, eine Doppel- oder Mehrfachlüfterkonfiguration mit einer sehr geringen Baulänge zu verwirklichen. Trotz einer beschränkten Baulänge ist es dabei möglich, die Steuereinheit in den bürstenlosen Kühlerlüfter zu integrieren. Dies ist bei bürstenbehafteten Gleichstrommotoren, wie sie im Stand der Technik Verwendung finden, nicht ohne eine Verlängerung der Baulänge möglich.

Insgesamt kann ein höherer Systemwirkungsgrad erzielt werden, da der bürstenlose Lüftermotor in der Regel einen um ca. 10-15% höheren Wirkungsgrad besitzt.

Vorteilhafte Ausgestaltungen der Erfindung sind in den Unteransprüchen angegeben.

Gemäß einer besonders bevorzugten Ausführungsform der Erfindung sind der erste Lüftermotor und der zweite Lüftermotor parallel geschaltet, so dass ein "paralleles Doppelmodul" entsteht.

Gemäß einer bevorzugten Ausführungsform der Erfindung ist die Steuereinheit an eine Versorgungsleitung und eine Masseleitung angeschlossen und weist eine Anzahl von Anschlusselementen zum Anschluss des ersten Lüftermotors auf. Die Steuereinheit kann dabei zum einen in dem Gehäuse des ersten Lüftermotors angeordnet sein. Sie kann jedoch andererseits auch außerhalb des Gehäuses des ersten Lüftermotors als externe Steuereinheit vorgesehen sein.

Bei dem ersten Lüftermotor handelt es sich vorzugsweise um einen bürstenlosen Motor mit einer beliebigen Anzahl von Phasen, beispielsweise mit drei oder fünf Phasen, der bipolar oder unipolar betrieben wird. Bei dem zweiten Lüftermotor handelt es sich vorzugsweise um einen bürstenbehafteten Gleichstrommotor, der einerseits über eine phasenabhängige Anzahl von Gleichrichtern mit den Anschlusselementen des ersten Lüftermotors und andererseits mit der Versorgungsleitung oder der Masseleitung der Steuereinheit verbunden ist. Durch die Verwendung eines bürstenbehafteten Gleichstrommotors kann das Kühlerlüftermodul kostengünstiger als vergleichbare Lösungen mit zwei bürstenlosen Lüftermotoren hergestellt werden. Da für den bürstenbehafteten Gleichstrommotor keine separate Steuereinheit vorgesehen werden muss, werden zudem keine der nachfolgenden Bauelemente benötigt: Spannungsregler, Mikrocontroller, Resonatoren o.ä., Leistungsbauelemente wie MOSFETs oder Dioden, Treiberstufen, Interfaceschaltelemente, etc. Dies verringert die Herstellungskosten.

Alternativ kann anstelle es bürstenbehafteten Gleichstrommotors auch ein Asynchronmotor oder ein Synchronmotor verwendet werden. Dieser kann dann direkt mit den Anschlusselementen des ersten Motors verbunden werden. Durch die Verwendung eines Asynchronmotors oder Synchronmotors kann die Anzahl der benötigten Bauelemente nochmals verringert werden. Zudem sind Asynchronmotoren nicht nur äußerst robust, sondern auch vergleichsweise kostengünstig herstellbar.

Die Drehzahlregelung des ersten Motors erfolgt gemäß einer weiteren Ausführungsform in der Steuereinheit, die als Eingangssignal eine Drehzahl-Sollwert-Information erhält.

Die Erfindung wird nachfolgend anhand von Ausführungsbeispielen beschrieben, die mit Hilfe von Zeichnungen näher erläutert werden. Hierbei zeigen in vereinfachten Darstellungen:
- FIG 1: eine schematische Blockdarstellung eines parallelen Doppelmoduls,
- FIG 2: eine Schaltskizze eines parallelen Doppelmoduls mit einem bürstenbehafteten zweiten Motor in einer Aus- führung mit plusseitigem Anschluss,
- FIG 3: eine Schaltskizze eines parallelen Doppelmoduls mit einem bürstenbehafteten zweiten Motor in einer Aus- führung mit masseseitigem Anschluss und
- FIG 4: eine Schaltskizze eines parallelen Doppelmoduls mit einem Asynchronmotor.

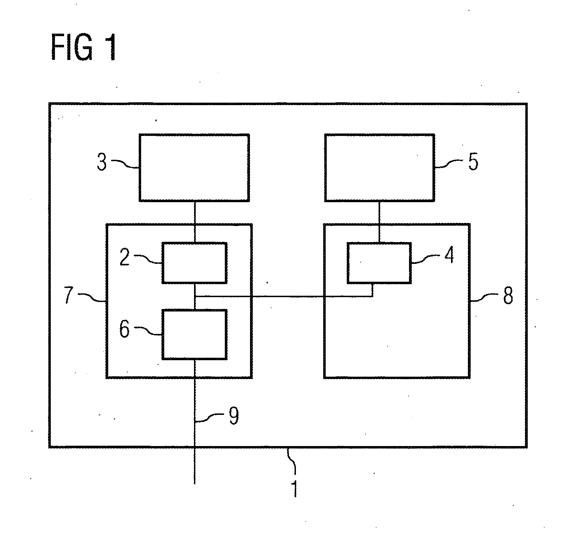

Erfindungsgemäß weist ein Kühlerlüftermodul 1 für ein Kraftfahrzeug einen ersten Lüftermotor 2 zum Antrieb eines ersten Kühlerlüfters 3 und einen zweiten Lüftermotor 4 zum Antrieb eines zweiten Kühlerlüfters 5 auf. FIG 1 zeigt eine solche Doppelkonfiguration in einer stark vereinfachten Abbildung, bei der eine Versorgungsleitung 9 sowie die weiteren Verbindungsleitungen nur schematisch gezeigt sind. Als einzige Steuereinheit dient die integrierte Steuereinheit 6 des ersten Lüftermotors 2 zugleich zum Betrieb des zweiten Lüftermotors 4, der parallel mit dem ersten Lüftermotor 2 verschaltet ist. Die integrierte Steuereinheit 6 ist dabei in dem Gehäuse 7 des ersten Lüftermotors 2 angeordnet, während das Gehäuse 8 des zweiten Lüftermotors frei bleibt und entsprechend kleiner ausgeführt werden kann.

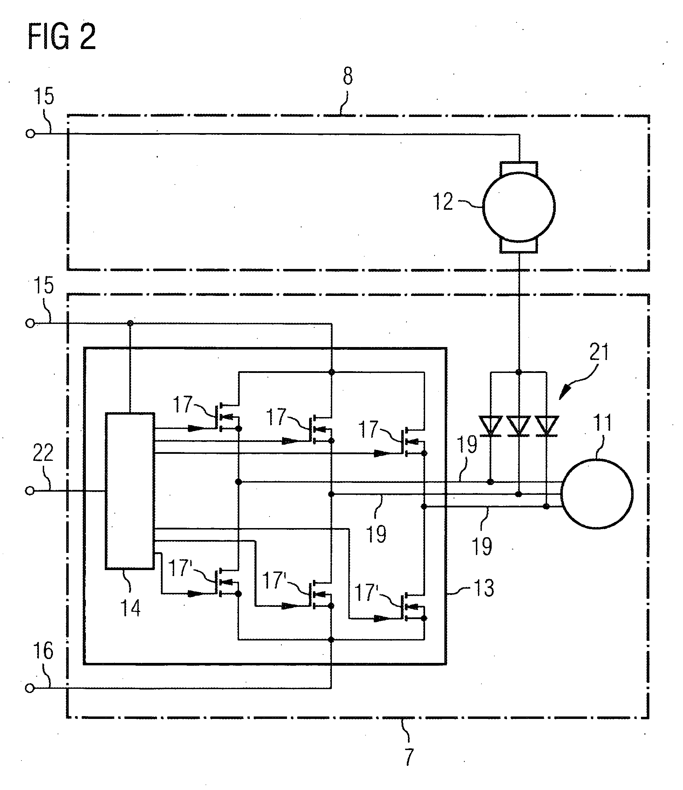

In einem ersten Ausführungsbeispiel (vgl. FIG 2) weist ein Kühlerlüftermodul für ein Kraftfahrzeug einen bürstenlosen Motor 11 als ersten Lüftermotor und einen bürstenbehafteten Gleichstrommotor 12 als zweiten Lüftermotor auf. Die Kühlerlüfter 3, 5 selbst sind aus Gründen der Übersichtlichkeit in FIG 2 nicht abgebildet. Die Lüftermotoren 11, 12 sind parallel geschaltet. Der bürstenlose Motor 11 weist eine integrierte Steuereinheit 13 auf, während für den bürstenbehafteten Gleichstrommotor 12 erfindungsgemäß keine separate Steuereinheit benötigt wird. In dem gezeigten Ausführungsbeispiel ist der bürstenlose Motor 11 ein dreiphasiger, bipolar betriebener Motor (Drehstrommotor).

Die Steuereinheit 13 weist eine Steuerelektronik 14 auf, die zur Versorgung der Lüftermotoren 11, 12 mit einer Versorgungsspannung an eine Kfz-übliche Hauptspannungs-Versorgungsleitung 15 ("Klemme 30") des Kraftfahrzeugs und eine entsprechende Masseleitung 16 ("Klemme 3,1") angeschlossen ist. Zur Ansteuerung des bürstenlosen Drehstrommotors 11 mit einem Dreiphasen-Drehstromsystem ist die Steuereinheit 13 in ihrem Leistungsteil mit der Funktionalität eines Umrichters ausgestattet. Hierzu dient eine Anordnung elektronischer Schalttransistoren 17, 17' (Leistungstransistoren, MOSFETs), wie sie zur Ansteuerung des bürstenlosen Drehstrommotors 11 benötigt wird. Da die Steuereinheit 13 des bürstenlosen Drehstrommotors 11 auch für den Betrieb des bürstenbehafteten Gleichstrommotors 12 dient, muss sie für die beiden Motorströme ausgelegt sein, d.h. bei der Ausführung der Steuereinheit 13 muss eine entsprechende Verlustleistung bei der Dimensionierung berücksichtigt werden.

Die Steuerelektronik 14 ist über eine Anschlussleitung 22 mit einem externen Signalgeber (nicht abgebildet) verbunden, der eine Drehzahl-Sollwert-Information bereitstellt.

Zum Anschluss des bürstenlosen Drehstrommotors 11 weist die Steuereinheit 13 drei Phasenanschlüsse 19 auf, die entsprechend an die elektronischen Schalttransistoren 17, 17' angeschlossen sind. Der bürstenbehaftete Gleichstrommotor 12 ist einerseits über drei Gleichrichter 21 (Leistungsdioden) mit diesen Phasenanschlüssen 19 verbunden. Aus dem Dreiphasen-Drehstromsystem wird durch die Gleichrichter 21 wieder eine Gleichspannung erzeugt. Andererseits ist der bürstenbehaftete Gleichstrommotor 12 mit der Gleichstrom-Versorgungsleitung 15 verbunden. Die Gleichstrom-Versorgungsleitung 15 dient also als gemeinsamer Bezugspunkt für beide Lüftermotoren 11, 12.

Zum Anschluss von bürstenbehafteten Gleichstrommotoren 12 als zweite Lüftermotoren gemäß der vorliegenden Erfindung müssen lediglich die genannten drei Phasenanschlüsse 19 zusätzlich vorgesehen werden. Dabei können beliebige Arten von Anschlusskontakten verwendet werden, beispielsweise Schraub- oder Klemmkontakte. Die Gleichrichter 21 sind aufgrund der dort bereits vorhandenen Kühlmöglichkeiten vorzugsweise ebenfalls (wie in FIG 2 abgebildet) in dem Gehäuse 7 des bürstenlosen Drehstrommotors 11 oder aber alternativ dazu in dem Gehäuse 8 des bürstenbehafteten Gleichstrommotors 12 angeordnet. Entsprechend müssen lediglich ein einziger Anschluss oder aber drei Anschlüsse aus dem Gehäuse 7 des bürstenlosen Drehstrommotors 11 herausgeführt werden.

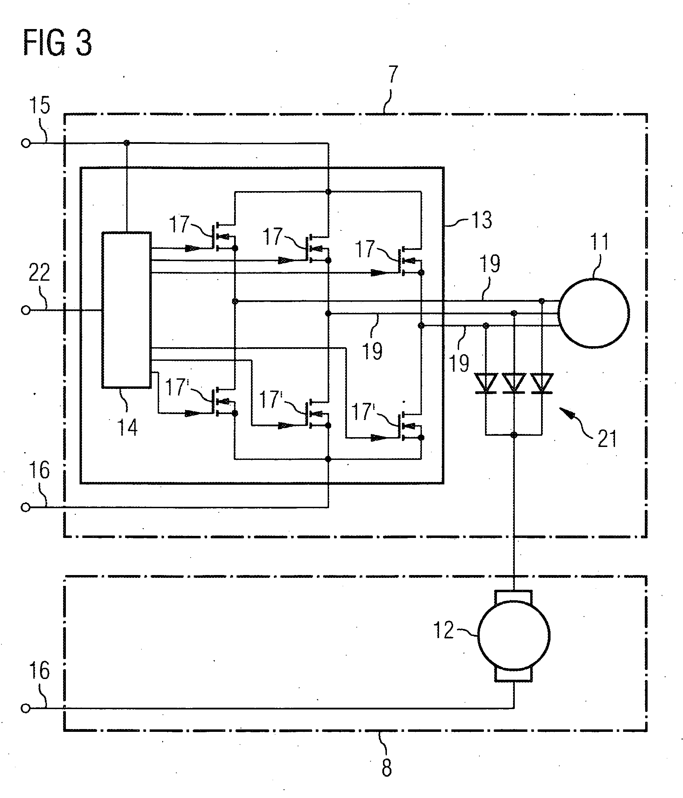

In einem zweiten Ausführungsbeispiel (vgl. FIG 3) kommt wiederum ein dreiphasiger bürstenloser Drehstrommotor 11 als erster Lüftermotor und ein bürstenbehafteter Gleichstrommotor 12 als zweiter Lüftermotor zum Einsatz. Der Aufbau des Kühlerlüftermoduls und die Verschaltung entspricht dabei dem in FIG 2 gezeigten Ausführungsbeispiel mit dem Unterschied, dass der bürstenbehaftete Gleichstrommotor 12 nicht mit der Gleichstrom-Versorgungsleitung 15, sondern mit der Masseleitung 16 verbunden ist. Mit anderen Worten dient die Masseleitung 16 als gemeinsamer Bezugspunkt für beide Lüftermotoren 11, 12. Der Anschluss der drei Gleichrichter 21 (Dioden) erfolgt entsprechend in umgekehrter Richtung.

Die Parallelschaltung der beiden Lüftermotoren 11, 12 hat folgende Auswirkungen:
Durch die Strombegrenzung in dem bürstenlosen Drehstrommotor 11 mit integrierter Steuereinheit 13 ergibt sich auch eine Strombegrenzung in dem bürstenbehafteten Gleichstrommotor 12, ohne dass zusätzliche Elektronikkomponenten oder andere Maßnahmen erforderlich sind. Damit lässt sich auf einfache Art und Weise sowohl eine Blockierschutzfunktion als auch eine Kurzschlussschutzfunktion für den bürstenbehafteten Gleichstrommotor 12 erreichen. Voraussetzung für eine funktionierende Schutzfunktion ist es, dass bei einer Strommessung in der Steuereinheit 13 beide Motorströme erfasst werden. Dies ist am einfachsten zu erreichen, wenn beide Ströme über die gleiche Strommesseinrichtung (nicht abgebildet) geleitet werden, z. B. einen Strommesswiderstand (shunt). Jegliche Überstromabschaltungen oder ähnliche Schutzfunktionen in der integrierten Steuereinheit 13 des bürstenlosen Drehstrommotors 11 schützen auch den bürstenbehafteten Gleichstrommotor 12.

Ein weiterer Vorteil der erfindungsgemäßen Anordnung ist es, dass für den bürstenbehafteten Gleichstrommotor 12 neben den zusätzlichen Gleichrichtern 21 keine weiteren Elektronikkomponenten erforderlich sind. Da der bürstenbehaftete Gleichstrommotor 12 keine separate Steuereinheit aufweist, fällt auch keine Verlustleistung durch Elektronikkomponenten an. Dadurch verringert sich auch der Kühlaufwand.

Die erfindungsgemäße Parallelschaltung der beiden Lüftermotoren 11, 12 hat auch Auswirkungen auf das Betriebsverhalten der beiden Kühlerlüfter 3, 5. Der bürstenlose Drehstrommotor 11 wird über die Steuereinheit 13 drehzahlgeregelt betrieben. Die Drehzahl eines Motors hängt stets direkt von der äquivalenten Spannung an dem Motor ab. Dem bürstenbehafteten Gleichstrommotor 12 wird also über die Gleichrichter 21 eine Spannung vorgegeben, welche der Drehzahl des bürstenlosen Drehstrommotors 11 entspricht und die Drehzahl des bürstenbehafteten Gleichstrommotors 12 bestimmt. Dies entspricht einer Drehzahlstellung ähnlich wie bei einem PWM-Steller. Eine Regelung der Drehzahl des bürstenbehafteten Gleichstrommotors 12 erfolgt dabei nicht.

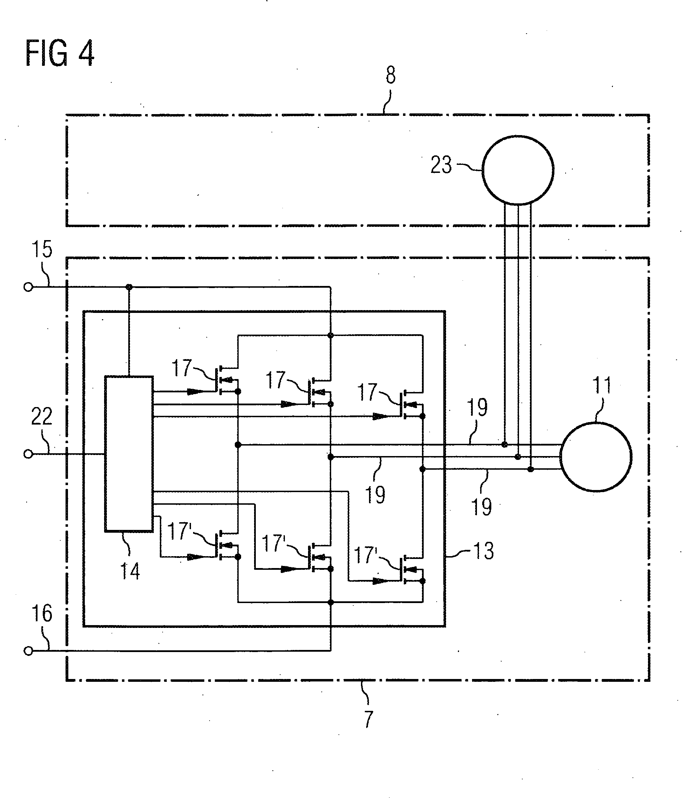

Alternativ kann anstelle eines bürstenbehafteten Gleichstrommotors 12 auch ein Asynchronmotor 23 als zweiter Lüftermotor vorgesehen sein, vgl. FIG 4. Der Anschluss des Asynchronmotors 23 erfolgt dabei direkt mit den Phasenanschlüssen 19 des bürstenlosen Drehstrommotors 11. Dabei werden aus dem Gehäuse 7 des ersten Lüftermotors 11 drei Anschlüsse herausgeführt. Der Asynchronmotor 23 folgt in dieser Konfiguration dem von der integrierten Steuereinheit 13 des bürstenlosen Drehstrommotors 11 vorgegeben dreiphasigem Netz. Diese Ausführung hat neben den bereits oben beschriebenen Eigenschaften den weiteren Vorteil, dass keine Gleichrichter benötigt werden.

In einem weiteren (nicht abgebildeten) Ausführungsbeispiel ist es vorgesehen, als erste und zweite Lüftermotoren identische Motoren zu verwenden, vorzugsweise bürstenlose Drehstrommotoren 11.

## Patentansprüche

1. Kühlerlüftermodul (1) für ein Kraftfahrzeug,
mit einem bürstenlosen ersten Lüftermotor (2; 11) zum Antrieb eines ersten Kühlerlüfters (3) und
mit einem zweiten Lüftermotor (4; 12; 23), welcher als ein bürstenbehafteter Gleichstrommotor (12) ausgebildet ist, zum Antrieb eines zweiten Kühlerlüfters (5),
wobei dem ersten Lüftermotor (2; 11) eine Steuereinheit (6; 13) zugeordnet ist, die zugleich mit dem ersten Lüftermotor (2; 11) auch den zweiten Lüftermotor (4; 12; 23) betreibt, und wobei der zweite Lüftermotor (2; 12; 23) einerseits über eine phasenabhängige Anzahl von Gleichrichtern (21) mit Anschlusselementen (19) des ersten Lüftermotors (2; 11) und andererseits mit der Versorgungsleitung (15) oder der Masseleitung (16) der Steuereinheit (6; 13) verbunden ist.

2. Kühlerlüftermodul (1) nach Anspruch 1,
**dadurch gekennzeichnet,**
**dass** der erste Lüftermotor (2; 11) und der zweite Lüftermotor (4; 12; 23) parallel geschaltet sind.

3. Kühlerlüftermodul (1) nach Anspruch 1 oder 2,
**dadurch gekennzeichnet,**
**dass** der zweite Lüftermotor ein Asynchronmotor (23) oder Synchronmotor ist, der direkt mit den Anschlusselementen (19) des ersten Motors (2; 11) verbunden ist.

4. Verfahren zum Betrieb eines Kühlerlüftermoduls (1) für ein Kraftfahrzeug,
wobei das Kühlerlüftermodul (1) einen bürstenlosen ersten Lüftermotor (2; 11) zum Antrieb eines ersten Kühlerlüfters (3) und einen zweiten Lüftermotor (4; 12; 23), welcher als ein bürstenbehafteter Gleichstrommotor ausgebildet ist, zum Antrieb eines zweiten Kühlerlüfters (5) aufweist,
wobei dem ersten Lüftermotor (2; 11) eine Steuereinheit (6; 13) zugeordnet ist, die zugleich mit dem ersten Lüftermotor (2; 11) auch den zweiten Lüftermotor (4; 12; 23) betreibt, und
wobei der erste Lüftermotor (2; 11) über die Steuereinheit (6; 13) drehzahlgeregelt angesteuert wird und sich die Drehzahl des zweiten Lüftermotors (4; 12; 23) in Abhängigkeit von der Drehzahl des ersten Lüftermotors (2; 11) einstellt,
und wobei der zweite Lüftermotor (2; 12; 23) einerseits über eine phasenabhängige Anzahl von Gleichrichtern (21) mit Anschlusselementen (19) des ersten Lüftermotors (2; 11) und andererseits mit der Versorgungsleitung (15) oder der Masseleitung (16) der Steuereinheit (6; 13) verbunden ist.

## Claims

1. Cooling fan module (1) for a motor vehicle,
- having a brushless first fan motor (2; 11) for driving a first cooling fan (3) and
- having a second fan motor (4; 12; 23), which is formed as a direct current motor (12) with brushes, for driving a second cooling fan (5),
wherein a control unit (6; 13) is allocated to the first fan motor (2; 11) and, at the same time as the first fan motor (2; 11), also operates the second fan motor (4; 12; 23), and wherein the second fan motor (2; 12; 23) is connected on the one hand via a phase-dependent number of rectifiers (21) to connection elements (19) of the first fan motor (2; 11) and on the other hand to the supply line (15) or earth wire (16) of the control unit (6; 13).

2. Cooling fan module (1) as claimed in claim 1, **characterised in that** the first fan motor (2; 11) and the second fan motor (4; 12; 23) are connected in parallel.

3. Cooling fan module (1) as claimed in claim 1 or 2, **characterised in that** the second fan motor is an asynchronous motor (23) or synchronous motor which is connected directly to the connection elements (19) of the first motor (2; 11).

4. Method for driving a cooling fan module (1) for a motor vehicle,
wherein the cooling fan module (1) has a brush-less first fan motor (2; 11) for driving a first cooling fan (3) and a second fan motor (4; 12; 23), which is formed as a direct current motor with brushes, for driving a second cooling fan (5), wherein a control unit (6; 13) is allocated to the first fan motor (2; 11) and, at the same time as the first fan motor (2; 11), also operates the second fan motor (4; 12; 23), and wherein the first fan motor (2; 11) is actuated via the control unit (6; 13) in a rotational speed-controlled manner and the rotational speed of the second fan motor (4; 12; 23) is set in dependence upon the rotational speed of the first fan motor (2; 11),
and wherein the second fan motor (2; 12; 23) is connected on the one hand via a phase-dependent number of rectifiers (21) to connection elements (19) of the first fan motor (2; 11) and on the other hand to the supply line (15) or the earth wire (16) of the control unit (6; 13).

## Revendications

1. Module de ventilateurs de radiateur (1) pour un véhicule automobile,
- comprenant un premier moteur de ventilateur sans balais (2 ; 11) destiné à l'entraînement d'un premier ventilateur de radiateur (3) et
- comprenant un second moteur de ventilateur (4 ; 12 ; 23), qui est conçu comme un moteur à courant continu à balais (12), destiné à l'entraînement d' un second ventilateur de radiateur (5),
le premier moteur de ventilateur (2 ; 11) étant associé à une unité de commande (6 ; 13), qui fait également fonctionner le deuxième moteur de ventilateur (4 ; 12 ; 23) en même temps que le premier moteur de ventilateur (2 ; 11), et
le deuxième moteur de ventilateur (2 ; 12 ; 23) étant relié aux éléments de raccordement (19) du premier moteur de ventilateur (2 ; 11) par un nombre de redresseurs dépendant de la phase d'une part, et au câble d'alimentation (15) ou au câble de masse (16) de l'unité de commande (6 ; 13) d'autre part.

2. Module de ventilateurs de radiateur (1) selon la revendication 1, **caractérisé en ce que** le premier moteur de ventilateur (2 ; 11) et le second moteur de ventilateur (4 ; 12 ; 23) sont montés en parallèle.

3. Module de ventilateurs de radiateur (1) selon la revendication 1 ou 2, **caractérisé en ce que** le second moteur de ventilateur est un moteur asynchrone (23) ou un moteur synchrone, qui est directement relié aux éléments de raccordement (19) du premier moteur (2 ; 11).

4. Méthode de fonctionnement d'un module de ventilateurs de radiateur (1) pour un véhicule automobile,
le module de ventilateurs de radiateur (1) présentant un premier moteur de ventilateur sans balais (2 ; 11) destiné à l'entraînement d'un premier ventilateur de radiateur (3) et un second moteur de ventilateur (4 ; 12 ; 23), qui est conçu comme un moteur à courant continu à balais, destiné à l'entraînement d'un second ventilateur de radiateur (5), le premier moteur de ventilateur (2 ; 11) étant associé à une unité de commande (6 ; 13), qui fait également fonctionner le deuxième moteur de ventilateur (4 ; 12 ; 23) en même temps que le premier moteur de ventilateur (2 ; 11),
la régulation du régime du premier moteur de ventilateur (2 ; 11) étant commandée par l'unité de commande (6 ; 13) et le régime du second moteur de ventilateur (4 ; 12 ; 23) s'établissant en fonction du régime du premier moteur de ventilateur (2 ; 11),
et le deuxième moteur de ventilateur (2 ; 12 ; 23) étant relié aux éléments de raccordement (19) du premier moteur de ventilateur (2 ; 11) par un nombre de redresseurs dépendant de la phase d'une part, et au câble d'alimentation (15) ou au câble de masse (16) de l'unité de commande (6 ; 13) d'autre part.
